(19) Europäisches Patentamt
European Patent Office
Office européen des brevets

(11) **EP 1 495 305 B1**

(12) **FASCICULE DE BREVET EUROPEEN**

(45) Date de publication et mention
de la délivrance du brevet:
**11.04.2007 Bulletin 2007/15**

(21) Numéro de dépôt: **03738172.0**

(22) Date de dépôt: **17.03.2003**

(51) Int Cl.:
**G01N 19/04** *(2006.01)*    **B32B 17/10** *(2006.01)*

(86) Numéro de dépôt international:
**PCT/FR2003/000851**

(87) Numéro de publication internationale:
**WO 2003/087785 (23.10.2003 Gazette 2003/43)**

(54) **PROCEDE POUR SELECTIONNER UN INTERCALAIRE QUANT A SA RESISTANCE MECANIQUE**

VERFAHREN ZUM AUSWÄHLEN EINER SCHICHT BEZÜGLICH IHRES MECHANISCHEN WIDERSTANDES

METHOD FOR SELECTING AN INSERT ON THE BASIS OF THE MECHANICAL RESISTANCE THEREOF

(84) Etats contractants désignés:
**AT BE BG CH CY CZ DE DK EE ES FI FR GB GR HU IE IT LI LU MC NL PT RO SE SI SK TR**

(30) Priorité: **15.04.2002 FR 0204776**

(43) Date de publication de la demande:
**12.01.2005 Bulletin 2005/02**

(73) Titulaire: **SAINT-GOBAIN GLASS FRANCE**
**92400 Courbevoie (FR)**

(72) Inventeurs:
• **NUGUE, Jean-Clément**
**F - 60260 Lamorlaye (FR)**
• **VIDAL, Boris**
**F - 16600 Touvre (FR)**
• **NOURRY, Emmanuel**
**F-60400 Salency (FR)**

(74) Mandataire: **Aupetit, Muriel J. C.**
**Saint-Gobain Recherche**
**39, Quai Lucien Lefranc**
**93300 Aubervilliers (FR)**

(56) Documents cités:
**EP-B- 0 387 148    FR-A- 2 697 829**
**FR-A- 2 808 474**

## Description

L'invention concerne un procédé de sélection d'un intercalaire polymérique devant être choisi pour ses qualités de résistance mécanique et destiné par exemple à être utilisé dans un vitrage feuilleté et, de préférence donnant au vitrage des propriétés acoustiques.

On entend par intercalaire polymérique, un intercalaire monolithique, ou bien composite et constitué par l'assemblage de plusieurs éléments polymériques sous forme de couches, résines ou films. De préférence, au moins l'un des éléments incorpore du butyral de polyvinyle (PVB).

Les vitrages feuilletés sont généralement destinés à équiper des véhicules ou des bâtiments. Ils possèdent des atouts majeurs sur le plan de leur résistance mécanique. En effet, lors d'un choc, avant la rupture du verre, l'intercalaire permet avantageusement d'absorber une partie de l'énergie par dissipation visqueuse. Le rôle de l'intercalaire est également primordial puisqu'il assure en grande partie le maintien de la structure lorsque le verre est totalement fissuré, ce qui permet grâce à l'adhérence des morceaux de verre sur le film, d'éviter la projection d'éclats de verre et par conséquent la blessure de personnes.

Par ailleurs, on souhaite de plus en plus pour un meilleur confort que l'intercalaire permette au vitrage de répondre également à des critères de performances acoustiques afin d'atténuer la perception des bruits aériens et/ou solidiens parvenant via le vitrage au sein de l'habitacle.

Le butyral de polyvinyle (PVB) est couramment utilisé pour ses performances mécaniques. Il peut également assurer au vitrage feuilleté des performances acoustiques lorsque sa composition, dont notamment son taux de plastifiants, est bien adaptée.

La sélection de l'intercalaire pour assurer des performances acoustiques est établie grâce à une méthode de détermination de la fréquence critique du verre feuilleté et à sa comparaison avec la fréquence critique d'un barreau de verre. Une telle méthode est décrite dans le brevet EP-B-O 100 701; un intercalaire est considéré convenable lorsqu'un barreau de 9 cm de longueur et de 3 cm de largeur constitué d'un verre feuilleté qui comprend deux feuilles de verre de 4 mm d'épaisseur réunies par ledit intercalaire d'épaisseur de 2 mm a une fréquence critique qui diffère au plus de 35 % de celle d'un barreau de verre ayant la même longueur et la même largeur de 4 mm d'épaisseur.

Ce procédé de sélection, valable pour tout type d'intercalaire destiné à son incorporation dans un vitrage feuilleté, est non seulement applicable à du PVB mais aussi à d'autres films polymériques.

Or que ce soit l'utilisation dans des vitrages feuilletés de PVB ou d'autres films polymériques, en combinaison ou non, afin d'obtenir des vitrages dits "acoustiques", il est primordial que l'intercalaire réponde à des critères de résistance mécanique.

En effet, on exige pour des vitrages de bâtiment ou d'automobile qu'ils présentent d'excellentes capacités de réponse en matière de protection aux chocs tels que des heurts accidentels, la chute d'objet, de personnes, le vandalisme et l'effraction par des jets d'objets. La grande majorité des vitrages dans leur utilisation doivent au moins remplir les critères de la norme européenne EN 356 jusqu'à la classe P2A.

On connaît d'après la demande de brevet européen EP 1 151 855 une méthode d'appréciation de la résistance à la déchirure de l'intercalaire. Pour une épaisseur donnée de l'intercalaire, on calcule la valeur de l'énergie critique $J_c$ de l'intercalaire qui est représentative de l'énergie nécessaire à la propagation d'une fissure initialisée dans l'intercalaire, si cette valeur est supérieure à une valeur de référence, l'intercalaire répond au critère de résistance à la déchirure.

Cependant, les inventeurs ont mis en évidence que certains intercalaires bien que répondant au critère de résistance à la déchirure n'étaient toutefois pas pleinement satisfaisants sur le plan de la résistance mécanique.

Par conséquent, le but de l'invention est de fournir un procédé de sélection de la qualité de la résistance mécanique d'un intercalaire, éventuellement également à propriété d'isolation acoustique, qui complète celui existant et décrit dans la demande de brevet EP 1 151 855 afin de garantir totalement l'efficacité de l'intercalaire utilisé pour la protection aux chocs.

Selon l'invention, le procédé qui consiste à évaluer la résistance à la déchirure de l'intercalaire, est caractérisé en ce qu'il consiste également à évaluer l'adhésion dudit intercalaire vis-à-vis d'au moins un substrat verrier, l'adhésion de l'intercalaire étant évaluée en réalisant une torsion d'un échantillon de l'intercalaire solidaire de deux substrats en verre, en mesurant la valeur de la force de torsion ou du couple pour laquelle la dissociation de l'intercalaire avec au moins l'un des substrats est amorcée, en calculant à partir de cette valeur la contrainte de cisaillement $\tau$, et en comparant cette valeur à une valeur d'alerte établie pour un intercalaire de référence constitué par du PVB.

Selon une caractéristique, la résistance à la déchirure est évaluée en

- déterminant la valeur de l'énergie critique $J_c$ de l'intercalaire, valeur représentative de l'énergie nécessaire à la propagation d'une fissure initialisée dans l'intercalaire;

- calculant la valeur d'énergie critique rapportée à l'épaisseur $\tilde{J}c$ et définie par la relation $\tilde{J}c = J_c \times e_1$, $e_1$ étant l'épaisseur de l'intercalaire;

- comparant $\tilde{J}c$ à une valeur de référence $\tilde{J}ref$ représentative d'un intercalaire de référence constitué par un film de PVB. d'épaisseur 0,38 mm, et égale à 13,3 J/m; l'intercalaire répondant au critère de résistance à la déchirure lorsque $\tilde{J}c > \tilde{J}ref$.

Selon une autre caractéristique, la résistance mécanique de l'intercalaire de référence en rapport avec son épaisseur se présente mathématiquement sous la forme d'une fonction sensiblement parabolique définie par l'énergie critique $J_C$ en fonction de la contrainte d'adhésion $\tau$. L'intercalaire dont la résistance mécanique est à évaluer satisfait aux critères de résistance à la déchirure et d'adhésion lorsqu'après évaluation des valeurs de l'énergie critique et de la contrainte d'adhésion, ces valeurs se situent à l'intérieur de la courbe parabolique qui présente un minimum correspondant à une valeur de l'énergie critique $J_C$ égale à 17 500 N/m².

L'intercalaire est sélectionné lorsqu'à une température de 20˚C, sa valeur d'énergie critique est supérieure à 17 500 J/m² et sa contrainte de cisaillement $\tau$ est comprise entre 3,8 et 6,9 MPa

En particulier, l'intercalaire est sélectionné lorsqu'à une température de 20˚C, sa valeur d'énergie critique est supérieure à 22 500 J/m² et sa contrainte de cisaillement $\tau$ est comprise entre 4,8 et 6,1 MPa.

Le procédé selon l'invention consiste également à sélectionner l'intercalaire pour les performances acoustiques données au vitrage feuilleté, l'intercalaire répondant à la sélection de propriétés d'isolation acoustique est notamment choisi lorsqu'un barreau de 9 cm de longueur et de 3 cm de largeur constitué d'un verre feuilleté qui comprend deux feuilles de verre de 4 mm d'épaisseur réunies par ledit intercalaire d'épaisseur de 2 mm a une fréquence critique qui diffère au plus de 35 % de celle d'un barreau de verre ayant la même longueur et la même largeur de 4 mm d'épaisseur.

De préférence, le dispositif qui évalue la contrainte de cisaillement d'un intercalaire est caractérisé selon l'invention en ce qu'il comporte deux systèmes à mors destinés à prendre en sandwich un échantillon de vitrage constitué de deux substrats verriers et de l'intercalaire, l'un des systèmes étant fixe tandis que l'autre est apte à être mobile et mis en rotation, un arbre de rotation du système à mors mobile, un moteur pour la rotation de l'arbre, un appareil de mesure de couple disposé entre le moteur et le système à mors mobile, et un coffret logeant les éléments de calcul et comprenant une partie affichage sur laquelle peut être lue la valeur de la contrainte.

L'invention est également relative à un intercalaire polymérique destiné à être incorporé dans un vitrage feuilleté, caractérisé en ce qu'il présente à une température de 20˚C, une valeur d'énergie critique supérieure à 17 500 J/m², de préférence supérieure à 22500 J/m² et une contrainte de cisaillement $\tau$ comprise entre 3,8 et 6,9 MPa, de préférence entre 4,8 et 6,1 MPa.

Selon une caractéristique, l'intercalaire présente une épaisseur au moins égale à 0,76 mm.

Selon une autre caractéristique, l'intercalaire présente une épaisseur $e$ égale à au moins $e_{ref} \times \dfrac{J_{ref}}{J_c}$

où,

- $J_c$ est la valeur énergétique critique propre au matériau de l'intercalaire et représentative de l'énergie nécessaire à la propagation d'une fissure initialisée dans l'intercalaire;
- $J_{ref}$ est une valeur énergétique critique de référence qui correspond à la valeur énergétique critique d'un film en polyvinyle butyral (PVB) et égale à 35 100 J/m2 pour une température de 20˚C et pour une vitesse d'étirement sur le film en PVB de 100 mm/mn;

$e_{ref}$ est une épaisseur de référence qui correspond à celle du film en PVB et égale à 0,38 mm.

Avantageusement, l'intercalaire donne au vitrage feuilleté auquel il est destiné des propriétés d'isolation acoustique. En particulier, il est tel qu'un barreau de 9 cm de longueur et de 3 cm de largeur constitué d'un verre feuilleté qui comprend deux feuilles de verre de 4 mm d'épaisseur réunies par ledit intercalaire d'épaisseur de 2 mm a une fréquence critique qui diffère au plus de 35 % de celle d'un barreau de verre ayant la même longueur et la même largeur de 4 mm d'épaisseur.

L'intercalaire comporte un ou plusieurs éléments polymériques, de préférence au moins un film en PVB.

Enfin l'invention est relative à un vitrage feuilleté comportant au moins deux feuilles de verre et au moins un intercalaire polymérique, notamment à base de PVB, caractérisé en ce que l'intercalaire présente à une température de 20˚C, une valeur d'énergie critique supérieure à 17 500 J/m², de préférence supérieure à 22500 J/m² et une contrainte de cisaillement $\tau$ comprise entre 3,8 et 6,9 MPa, de préférence entre 4,8 et 6,1 MPa.

Avantageusement, ce vitrage est un vitrage pour véhicule qui comporte deux feuilles de verre d'épaisseur chacune comprise entre 1,2 et 2,5 mm, et un intercalaire associé aux deux feuilles de verre présentant une épaisseur d'au moins 0,76 mm.

De préférence, l'intercalaire donne à ce vitrage des propriétés d'isolation acoustique, c'est-à-dire qu'en particulier, l'intercalaire est tel qu'un barreau de 9 cm de longueur et de 3 cm de largeur constitué d'un verre feuilleté qui comprend deux feuilles de verre de 4 mm d'épaisseur réunies par ledit intercalaire d'épaisseur de 2 mm a une fréquence critique qui diffère au plus de 35 % de celle d'un barreau de verre ayant la même longueur et la même largeur de 4 mm d'épaisseur.

D'autres avantages et caractéristiques de l'invention apparaîtront à la lecture de la description qui suit en regard des dessins annexés sur lesquels :

- la figure 1 est une vue en coupe d'une vitrage feuilleté simple présentant un unique film intercalaire;
- la figure 2 illustre schématiquement un dispositif expérimental pour évaluer la résistance à la déchirure de l'intercalaire;
- la figure 3 représente l'évolution de l'énergie du fond de fissure, fissure qui est réalisée dans l'intercalaire;
- la figure 4 représente la force de traction exercée sur l'intercalaire en fonction de la distance d'étirement de cet intercalaire;

- la figure 5 représente l'énergie potentielle de l'intercalaire en fonction de la distance d'étirement de cet intercalaire;

- la figure 6 illustre une vue de face schématique d'un dispositif expérimental pour évaluer l'adhésion de l'intercalaire vis-à-vis du substrat auquel il est associé;

- la figure 7 illustre une vue en coupe et de côté du dispositif de la figure 6;

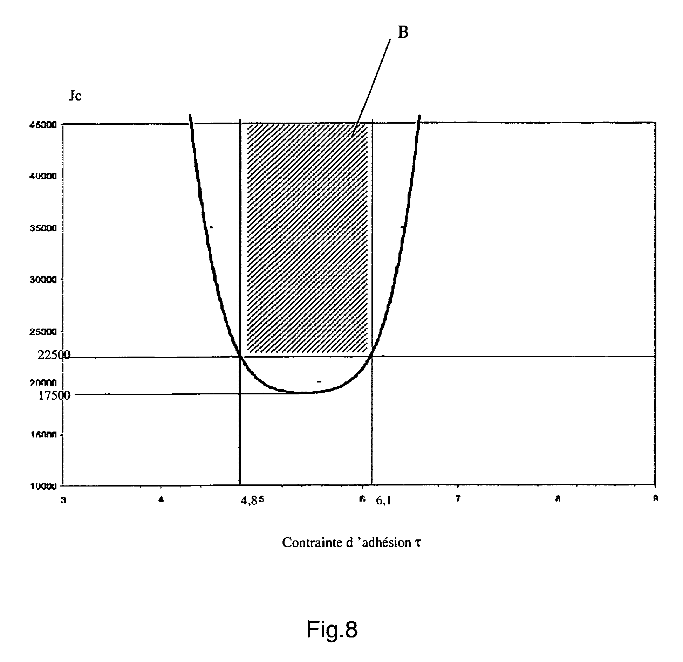

- la figure 8 illustre la courbe de l'énergie critique en fonction de la contrainte de cisaillement pour du PVB d'épaisseur 0,76 mm;

- la figure 9 illustre une vue de profil d'une variante de dispositif évaluant l'adhésion de l'intercalaire vis-à-vis du substrat auquel il est associé.

Le procédé de l'invention est destiné à sélectionner un intercalaire quant à sa résistance mécanique l'intercalaire étant destiné à être incorporé dans un vitrage feuilleté simple ou multiple qui doit résister à des chocs durs (norme EN 356 jusqu'à la classe P2A) ou à des chocs mous (norme EN 12600). Le procédé a pour but de sélectionner sans devoir évaluer la résistance mécanique par un effet de choc destructif.

A titre d'exemple ci-après, on désire connaître si un intercalaire est adapté à son incorporation dans un vitrage feuilleté tel qu'un vitrage de bâtiment ou d'automobile.

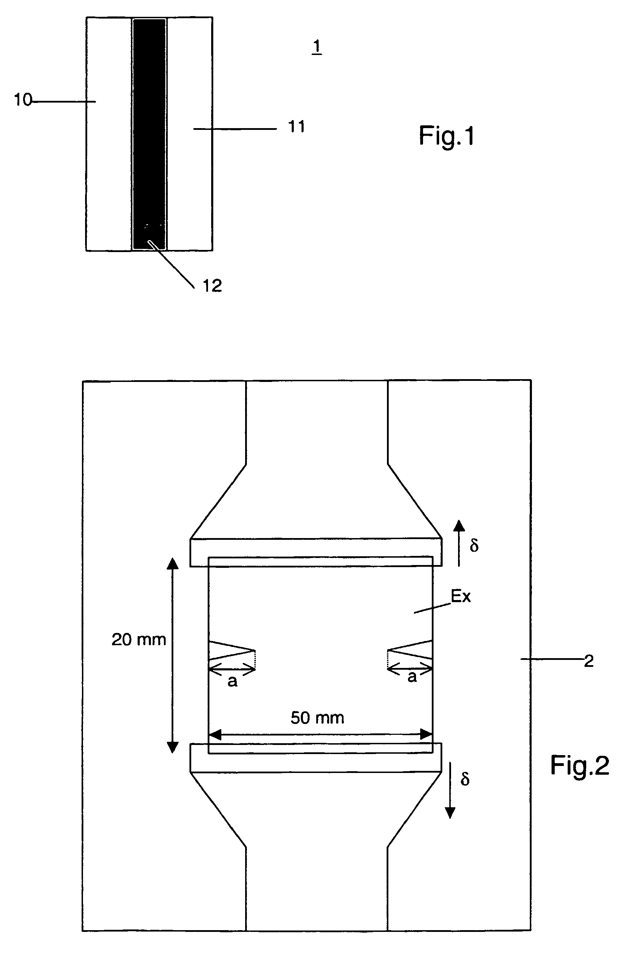

Le vitrage feuilleté simple de la figure 1 comporte deux substrats en verre 10 et 11 entre lesquels est disposé de manière solidaire un intercalaire 12.

Pour sélectionner l'intercalaire, il faut donc évaluer sa résistance mécanique. Les inventeurs ont mis en évidence qu'il convient d'évaluer deux paramètres que sont la résistance à la déchirure de l'intercalaire et l'adhésion de l'intercalaire vis-à-vis du substrat auquel il est associé.

La résistance à la déchirure est évaluée sur la base de la méthode de test et de calcul explicitée dans la demande de brevet EP 1 151 855 que nous reprenons ci-après.

La résistance à la déchirure de l'intercalaire est fonction du type de matériau le constituant et de son épaisseur. Elle est caractérisée par une valeur énergétique représentative de l'énergie nécessaire à la propagation d'une fissure initialisée dans le matériau. Cette énergie appelée énergie critique $J_c$ est différente pour chaque type de matériau et est indépendante de l'épaisseur du film, elle s'exprime en J/m$^2$.

La résistance à la déchirure ou énergie critique $J_c$ est donnée de manière connue par une méthode énergétique fondée sur l'intégrale de Rice J qui définit l'énergie localisée en fond de fissure d'un film subissant des contraintes très intenses à l'endroit d'une fissuration. Elle s'écrit sous la forme mathématique simplifiée (1):

$$J = -\frac{1}{e_1}\left(\frac{\partial U}{\partial a}\right), \text{ pour un étirement donné } \delta \text{ de}$$

l'échantillon testé qui sera nommé par la suite déplacement $\delta$, et où

$e_1$ est l'épaisseur de l'échantillon
a, la taille de la fissure,
U, l'énergie potentielle de l'échantillon.

La méthode avancée ci-dessous pour le calcul de l'énergie de fond de fissure J est celle développée par Tielking.

Le dispositif expérimental tel qu'illustré à la figure 2 est le suivant :

Des essais de traction au moyen d'une machine de traction-compression 2 sont réalisés sur plusieurs échantillons, par exemple au nombre de quatre $Ex_1$ à $Ex_4$, d'un même matériau et de surface identique à 100 mm$^2$ (50 mm de longueur par 20 mm de largeur). Chaque échantillon est entaillé selon la référence 20 sur ses côtés et perpendiculairement à la force de traction, d'une longueur de fissuration a distincte pour chaque échantillon $Ex_1$ à $Ex_4$, et correspondant respectivement à 5, 8, 12 et 15 mm.

Chaque échantillon Ex est étiré perpendiculairement aux fissurations 20 à une vitesse d'étirement de 100 mm/mn et sur une longueur d'étirement ou distance $\delta$ donnée, et dans un environnement où la température est de 20°C.

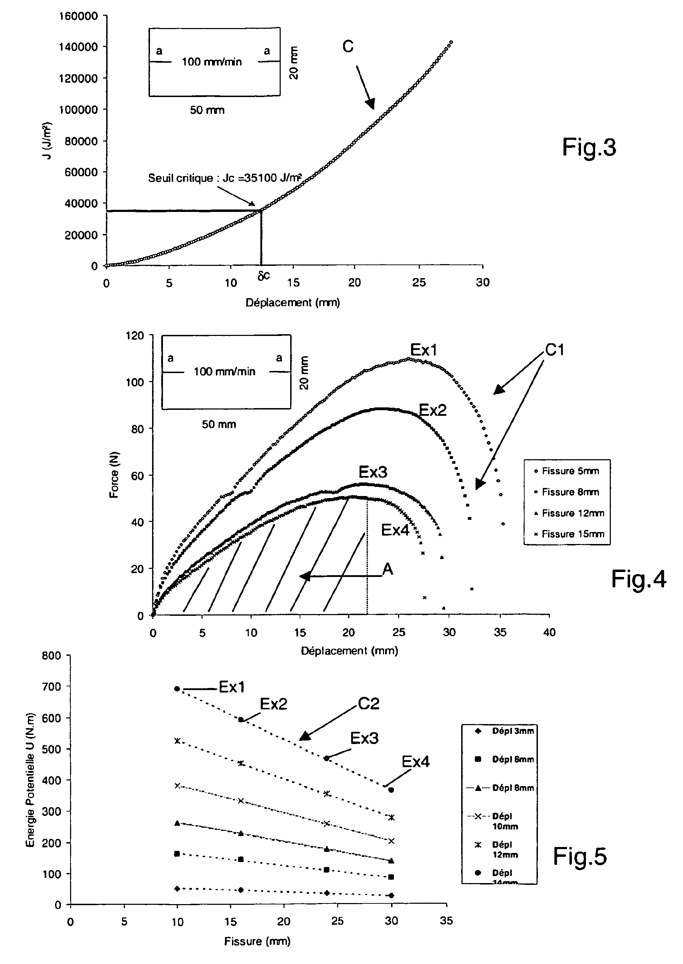

Cette méthode permet d'établir une courbe d'évolution C (figure 3) de l'énergie J de fond de fissure en fonction de l'étirement $\delta$ subi par l'échantillon, et de déterminer grâce à cette courbe l'énergie critique Jc d'initialisation de la déchirure de l'échantillon.

C'est donc à cette valeur critique Jc que le matériau se déchire et qu'il est par conséquent mécaniquement endommagé au regard de la fonction mécanique requise.

La courbe C est obtenue à la suite des étapes que nous expliquons ci-après. Les échantillons sont ici des films de polyvinyle butyral présentant une épaisseur de 0,38 mm.

En premier lieu, on trace pour chacun des échantillons $Ex_1$ à $Ex_4$ la courbe C1 (figure 4) représentative de la force de traction exercée sur l'échantillon en fonction de la distance d'étirement $\delta$ subi par ledit échantillon, distance qui va de 0 à 40 mm.

Grâce aux courbes C1 des échantillons, on déduit ensuite l'énergie potentielle U correspondante à un déplacement $\delta$ donné en fonction de la taille a d'évolution de la fissure par rapport à sa taille initiale. La mesure de l'énergie potentielle U est obtenue en calculant l'aire A, équivalente à la surface hachurée sur la figure 4, sous la courbe C1 comprise entre 0 mm et le déplacement $\delta$ donné, ici de 22 mm pour la surface hachurée et correspondant à l'échantillon $Ex_4$.

Ont été considérées huit déplacements $\delta$ de 3mm à 22 mm. On peut alors tracer pour chacun des huit déplacements une courbe C2 illustrée en figure 5, représentant l'énergie potentielle U en fonction de la taille *a* à laquelle la fissure a évolué.

La courbe C2 représentative de l'énergie potentielle U est une droite; par conséquent la dérivée $\left(\dfrac{\partial U}{\partial a}\right)$ formulée dans l'équation (1) de l'énergie J est en fait la pente de la droite C2 et donc égale à une constante. En divisant cette constante par l'épaisseur $e_1$ de l'échantillon, est calculée la valeur de J.

Après calcul de chacune des pentes correspondant aux huit déplacements, on établit la courbe C (figure 3) représentative de l'énergie J en fonction du déplacement δ.

A l'aide d'une caméra vidéo qui visualise la propagation de la fissure 20, on détecte pour quel déplacement $\delta_c$ la propagation de la fissure de l'échantillon commence. A l'aide de la courbe C, on en déduit à partir de ce déplacement $\delta_c$ la valeur correspondante de l'énergie critique $J_c$.

Cette valeur critique $J_c$ de 35 100 J/m² pour le PVB constitue la valeur de référence $J_{ref}$ de l'énergie au-dessus de laquelle toute valeur d'énergie calculée pour un autre matériau et selon la méthode explicitée ci-dessus sera considérée correcte de façon que ce matériau soit convenable pour répondre aux critères de résistance mécanique.

Un fois la valeur d'énergie critique propre $J_c$ calculée, elle est comme déjà expliqué plus haut rapportée à son épaisseur $\tilde{J}_c$ ($J_c$ x $e_1$) afin d'être comparée à celle de référence du PVB égale à 13,3 J/m, et d'en déduire l'épaisseur adéquate *e* lorsque l'épaisseur $e_1$ est insuffisante.

Quant à l'adhésion de l'intercalaire vis-à-vis du substrat auquel il est associé, elle est évaluée de la manière suivante.

Le test de l'adhésion consiste à effectuer un effort de torsion sur un échantillon du vitrage feuilleté jusqu'à l'amorce du décollage de l'intercalaire par rapport à au moins l'un des substrats.

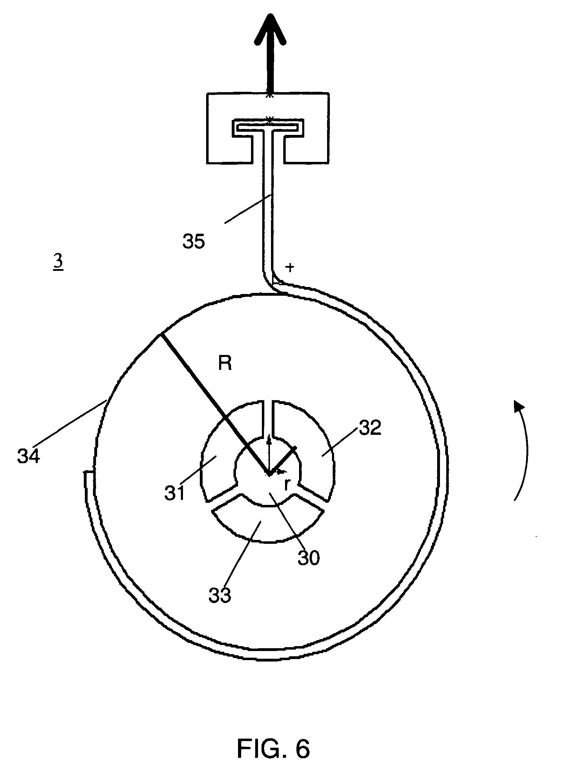

Le test est réalisé sur un échantillon rond 30 de rayon r égal à 10 mm au moyen d'un dispositif de torsion de type connu 3 illustré sur la figure 6.

Le dispositif comporte trois mors 31, 32, 33, une poulie 34 de rayon R égal à 100 mm et reliée à une chaîne d'entraînement 35 d'axe vertical. Les mors sont en forme d'arcs de cercle de 120˚ chacun, de manière à enserrer la totalité de l'échantillon. Le revêtement superficiel des mors est dans un matériau compatible mécaniquement avec le verre, par exemple en aluminium, en Téflon®, ou en polyéthylène.

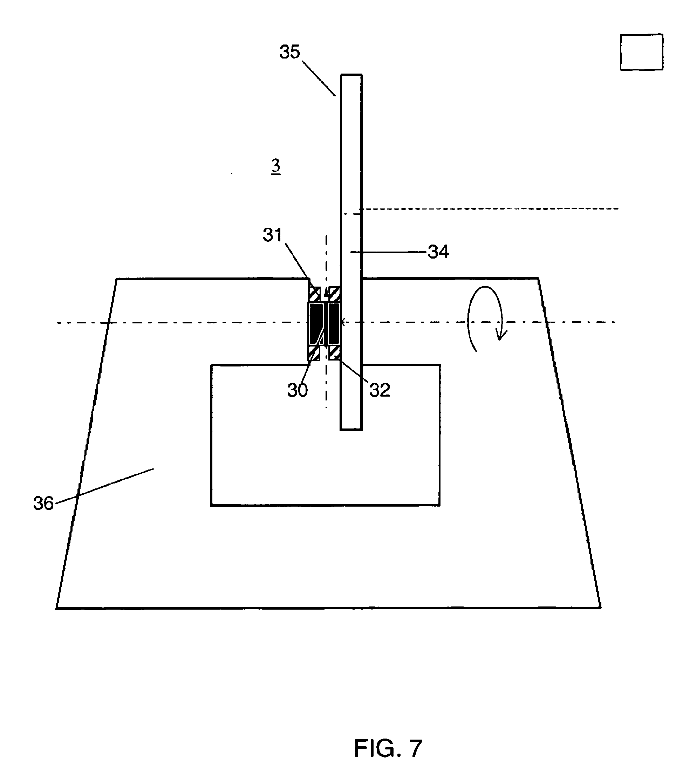

L'un des mors est maintenu fixe contre un bâti 36 (figure 7), tandis qu'un autre mors est fixé sur la poulie 34 qui est destinée à tourner pour exercer une torsion sur l'échantillon.

La rotation de la poulie est engendrée par le déplacement de la chaîne 35 reliée à la poulie. La chaîne est tractée à vitesse constante de 35 à 50 mm/mn au minimum.

On mesure à l'aide d'un capteur de force la force F nécessaire à l'apparition d'un début de décollement de l'intercalaire lors de la torsion de l'échantillon.

On peut en déduire par calcul la contrainte de cisaillement par la formule connue:

$$\tau = \frac{2FR}{\pi r^3}$$

où on rappelle que F est la force nécessaire à l'apparition d'un début de décollement de l'intercalaire, R est le rayon de la poulie et r est le rayon de l'échantillon.

Ce dispositif est toutefois volumineux et les tests doivent donc se faire impérativement en laboratoire. Il n'est ainsi pas adapté à des mesures de type "indicateurs procédé" sur une ligne de fabrication de vitrages feuilletés.

Or, pour la fabrication de vitrage feuilletés, bien que la composition de l'intercalaire polymérique soit élaborée pour répondre aux valeurs de contraintes fixées par l'invention, une mauvaise adhésion de l'intercalaire peut néanmoins apparaître dans le produit fini en raison de paramètres liés au procédé de fabrication du vitrage. Il peut s'agir par exemple des conditions de stockage de l'intercalaire, si le taux d'humidité n'est pas adéquat, les liaisons en hydroxyle pour du PVB peuvent être altérées par l'eau ce qui nuira au collage de l'intercalaire avec le verre. Une mauvaise adhésion peut également être due à un mauvais lavage du verre, un dépôt d'ions pourra conduire à une consommation d'hydroxyle. L'étape de calandrage lors de l'assemblage du verre et de l'intercalaire agit aussi sur la qualité du collage, la température et les efforts de pression devant être bien contrôlés.

Aussi, les inventeurs ont mis au point un autre dispositif de mesure que celui décrit plus haut qui, avantageusement est de faible encombrement et facilement transportable afin de réaliser des mesures pendant le suivi de fabrication à proximité de la ligne de fabrication de sorte qu'il devient possible d'intervenir rapidement sur le procédé en réponse à des mauvaises valeurs de contraintes mesurées. Ce dispositif constitue ainsi un outil de gestion de la qualité de fabrication de vitrage feuilletés.

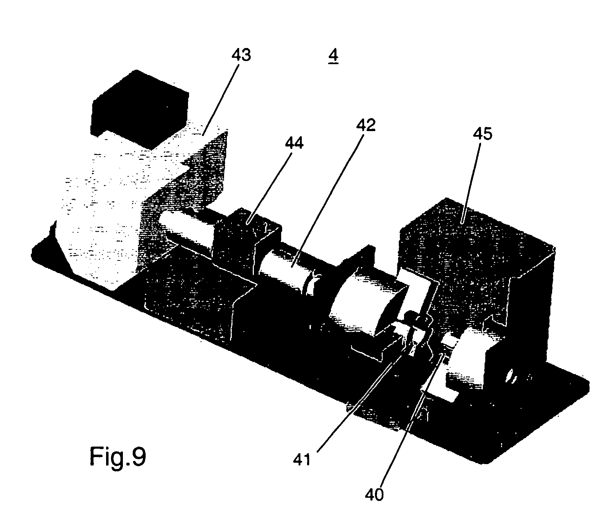

Miniaturisé à environ 60 cm par 20 cm, le dispositif 4 de la figure 9 comporte deux systèmes à trois mors 40 et 41, un arbre de rotation 42, un moteur 43 pour la rotation de l'arbre, un appareil de mesure de couple 44 et un coffret 45 logeant les éléments de calcul.

L'échantillon rond de vitrage feuilleté est destiné à être pris en sandwich entre les deux systèmes à mors 40 et 41, l'un des systèmes 40 étant fixe tandis que l'autre est apte à être mobile et mis en rotation grâce à sa connexion à l'arbre 42. L'appareil de mesure de couple est disposé entre le moteur et le système à mors mobile 41. La vitesse de rotation de l'arbre dépend de l'épaisseur du film. A titre d'exemple, pour un film d'épaisseur 0,76 mm, la rotation est de l'ordre de 0,08 tour/mn.

Le système 41 tourne et lorsque le moment du couple mesuré s'inverse, l'amorce du décollage de l'intercalaire a eu lieu. L'appareil de mesure est relié aux éléments de calcul du coffret 45 qui comporte une partie affichage sur laquelle est directement lisible la valeur de la contrainte $\tau$. L'adhésion est convenable si cette valeur est dans la plage définie par l'invention comme expliqué ci-après.

Pour apprécier finement les dispersions de la valeur de la contrainte $\tau$, on préfère répéter le test sur plusieurs échantillons, par exemple au nombre minimal de cinq, et calculer une moyenne de la contrainte associée à son écart-type.

Enfin, la valeur de la contrainte est comparée à une plage d'alerte à l'intérieur de laquelle toute valeur convient pour satisfaire au critère d'adhésion. La plage d'alerte de la contrainte d'adhésion $\tau$ est égale à 3,8 - 6,9 MPa. Cette plage d'alerte a été établie à partir d'un film de PVB qui, rappelons le, est considéré actuellement comme intercalaire le plus performant sur le plan de la résistance mécanique pour satisfaire la norme EN356, en particulier la classe caractérisante (P2A) d'un PVB de 0,76 mm d'épaisseur.

Pour faciliter l'analyse d'un intercalaire quelconque avec l'intercalaire de référence qui est le PVB, les inventeurs ont su mettre en évidence que la résistance mécanique peut être définie par une courbe de référence représentative de l'énergie critique $J_C$ en fonction de la contrainte d'adhésion, courbe de forme sensiblement parabolique.

A titre d'exemple, la figure 7 montre cette courbe pour une épaisseur d'intercalaire de PVB de 0,76 mm. L'énergie critique variant en fonction de l'épaisseur, pour une épaisseur de 0,76 mm, la valeur de référence de l'énergie est égale à 17500 J/m$^2$. Comme sur ce graphique, l'énergie n'est pas rapportée à l'épaisseur, il convient pour toute comparaison avec cette courbe de tester un intercalaire de même épaisseur.

Par conséquent, la valeur minimale à laquelle doit satisfaire l'énergie critique correspond au minimum de la courbe, à savoir 17500 J/m$^2$, et la contrainte d'adhésion doit être comprise dans une plage centrée sur la valeur 5,5 MPa et s'élargissant selon l'accroissement de la valeur de l'énergie critique. Ainsi, les valeurs de l'énergie critique et de la contrainte d'adhésion évaluées pour un intercalaire à tester qui se trouvent à l'intérieur de cette courbe parabolique impliquent que l'intercalaire testé est considéré satisfaisant sur le plan de la résistance mécanique.

Afin de répondre avec une reproductibilité acceptable aux deux critères de résistance à la déchirure et de l'adhésion, l'intercalaire doit présenter une énergie critique $J_C$ supérieure à 17 500 J/m$^2$ et une contrainte d'adhésion comprise entre 3,8 et 6,9 MPa. En dessous de 3,8 et au-dessus de 6,9 MPa pour la contrainte d'adhésion, l'assemblage du verre feuilleté présente une forte probabilité d'un mauvais comportement mécanique. Entre 3,8 et 4, 8 et entre 6,7 et 6,9 MPa, on peut considérer que l'intercalaire répond à la résistance mécanique attendue tout en n'étant pas optimum.

Pour un intercalaire optimum, on préférera considérer une zone incluse nécessairement dans la parabole, ici la zone B. Aussi, un intercalaire présentant une épaisseur minimale de 0,76 mm répondant aux exigences de la classe P2A sera choisi lorsque, de préférence, l'énergie critique $J_C$ est supérieure à 22 500 J/m$^2$ et la contrainte d'adhésion $\tau$ est comprise entre 4,8 et 6,1 MPa.

D'autres plages de la contrainte d'adhésion $\tau$ peuvent être mises en évidence pour chaque type de choc, notamment à énergie d'impact relativement faible et de surface de contact développée (chocs mous).

Si l'on désire sélectionner un intercalaire pour un vitrage feuilleté qui présente à la fois des propriétés d'isolation acoustique et de résistance mécanique. On choisira d'abord l'intercalaire pour ses performances acoustiques. Pour y parvenir, on se réfère au brevet EP-B-0 100 701 ou bien à la demande de brevet EP 0 844 075 qui énoncent deux variantes de technique de sélection, résumées par ailleurs dans la demande de brevet EP 1 151 855 citée plus haut.

En particulier, un intercalaire présente des propriétés d'isolation acoustique lorsqu'un barreau de 9 cm de longueur et de 3 cm de largeur constitué d'un verre feuilleté qui comprend deux feuilles de verre de 4 mm d'épaisseur réunies par ledit intercalaire d'épaisseur de 2 mm a une fréquence critique qui diffère au plus de 35 % de celle d'un barreau de verre ayant la même longueur et la même largeur de 4 mm d'épaisseur.

Une fois le matériau choisi, on évalue son adhésion en calculant sa contrainte de cisaillement qui, si elle se situe dans la plage souhaitée, par exemple 4,8-6,1 MPa pour satisfaire à la norme EN 356 selon une classe P2A, répond alors au critère d'adhésion. Enfin, on détermine son épaisseur pour répondre au critère de résistance mécanique. L'épaisseur $e$ de l'intercalaire doit au moins être égale à $e_{ref} \times \dfrac{J_{ref}}{J_c}$ où,

- $J_c$ est la valeur énergétique critique propre au matériau de l'intercalaire et représentative de l'énergie nécessaire à la propagation d'une fissure initialisée dans l'intercalaire;
- $J_{ref}$ est une valeur énergétique critique de référence qui correspond à la valeur énergétique critique d'un film en polyvinyle butyral (PVB) et égale à 35 100 J/m2 pour une température de 20˚C et pour une vitesse d'étirement sur le film en PVB de 100 mm/mn;
- $e_{ref}$ est une épaisseur de référence qui correspond à celle du film en PVB et égale à 0,38 mm.

La résistance à la déchirure du matériau qu'on identifiera donc directement à l'énergie critique $J_c$ n'est évaluée qu'après appréciation des performances acoustiques dudit matériau et de son adhésion. En effet, en vue d'utiliser un intercalaire pour un vitrage feuilleté d'isolation acoustique et devant répondre aux normes de protection contre les chocs, l'invention a adopté de choisir en premier lieu le matériau adéquat pour répondre aux critères d'isolation acoustique, puis de tester les performances d'adhésion de ce matériau afin d'en déduire l'épaisseur *e* nécessaire pour répondre aux critères de résistance à la déchirure.

A noter que le vitrage satisfaisant sur le plan de la résistance mécanique peut comprendre un intercalaire monolithique d'épaisseur *e* ou bien une pluralité d'intercalaires séparées par divers substrats, la somme des épaisseurs des intercalaires correspondant à l'épaisseur *e* calculée.

## Revendications

1. Procédé pour sélectionner un intercalaire polymérique destiné à être choisi pour ses qualités de résistance mécanique afin de renter dans la constitution d'un vitrage feuilleté, le procédé consistant à évaluer la résistance à la déchirure de l'intercalaire, **caractérisé en ce qu'**il consiste également à évaluer l'adhésion dudit intercalaire vis-à-vis d'au moins un substrat verrier, l'adhésion de l'intercalaire étant évaluée en réalisant une torsion d'un échantillon de l'intercalaire solidaire de deux substrats en verre, en mesurant la valeur de la force de torsion ou du couple pour laquelle la dissociation de l'intercalaire avec au moins l'un des substrats est amorcée, en calculant à partir de cette valeur la contrainte de cisaillement $\tau$, et en comparant cette valeur à une valeur d'alerte établie pour un intercalaire de référence constitué par du PVB..

2. Procédé selon la revendication 1, **caractérisé en ce que** la résistance à la déchirure est évaluée en

   - déterminant la valeur de l'énergie critique $J_c$ de l'intercalaire, valeur représentative de l'énergie nécessaire à la propagation d'une fissure initialisée dans l'intercalaire;
   - calculant la valeur d'énergie critique rapportée à l'épaisseur $\tilde{J}c$ et définie par la relation $\tilde{J}c = J_c \times e_1$, $e_1$ étant l'épaisseur de l'intercalaire;
   - comparant $\tilde{J}c$ à une valeur de référence $\tilde{J}ref$ représentative d'un intercalaire de référence constitué par un film de PVB d'épaisseur 0,38 mm, et égale à 13,3 J/m; l'intercalaire répondant au critère de résistance à la déchirure lorsque $\tilde{J}c > \tilde{J}ref$.

3. Procédé selon la revendication 1, **caractérisé en ce que** la résistance mécanique de l'intercalaire de référence en rapport avec son épaisseur se présente mathématiquement sous la forme d'une fonction sensiblement parabolique définie par l'énergie critique $J_c$ en fonction de la contrainte d'adhésion $\tau$.

4. Procédé selon la revendication 3, **caractérisé en ce que** l'intercalaire dont la résistance mécanique est à évaluer satisfait aux critères de résistance à la déchirure et d'adhésion lorsqu'après évaluation des valeurs de l'énergie critique et de la contrainte d'adhésion, ces valeurs se situent à l'intérieur de la courbe parabolique qui présente un minimum correspondant à une valeur de l'énergie critique de 17 500 J/m$^2$.

5. Procédé selon l'une quelconque des revendications précédentes , **caractérisé en ce que** l'intercalaire est sélectionné lorsqu'à une température de 20°C, sa valeur d'énergie critique est supérieure à 17 500 J/m$^2$ et sa contrainte de cisaillement $\tau$ est comprise entre 3,8 et 6,9 MPa.

6. Procédé selon la revendication 5, **caractérisé en ce que** l'intercalaire est sélectionné lorsqu'à une température de 20°C, sa valeur d'énergie critique est supérieure à 22 500 J/m$^2$ et sa contrainte de cisaillement $\tau$ est comprise entre 4,8 et 6,1 M Pa.

7. Procédé selon la revendication 1, **caractérisé en ce qu'**il consiste à sélectionner l'intercalaire sans devoir évaluer la résistance mécanique par un effet de choc destructif du vitrage.

8. Procédé selon l'une quelconque des revendications précédentes, **caractérisé en qu'**il consiste également à sélectionner l'intercalaire pour les performances acoustiques données au vitrage feuilleté, l'intercalaire répondant à la sélection de propriétés d'isolation acoustique est notamment choisi lorsqu'un barreau de 9 cm de longueur et de 3 cm de largeur constitué d'un verre feuilleté qui comprend deux feuilles de verre de 4 mm d'épaisseur réunies par ledit intercalaire d'épaisseur de 2 mm a une fréquence critique qui diffère au plus de 35 % de celle d'un barreau de verre ayant la même longueur et la même largeur de 4 mm d'épaisseur.

9. Procédé selon l'une quelconque des revendications précédentes, **caractérisé en qu'**il consiste à choisir en premier lieu le matériau adéquat pour répondre aux critères d'isolation acoustique, puis de tester les performances d'adhésion de ce matériau selon la revendication 3 afin d'en déduire l'épaisseur *e* nécessaire pour répondre aux critères de résistance à la déchirure selon la revendication 2.

10. Dispositif de mise en oeuvre du procédé selon l'une quelconque des revendications précédentes, **caractérisé ce que** le dispositif évalue la contrainte de cisaillement d'un intercalaire, et comporte deux systèmes à mors (40, 41) destinés à prendre en sandwich un échantillon de vitrage constitué de deux substrats verriers et de l'intercalaire, l'un des systèmes (40) étant fixe tandis que l'autre (41) est apte à être mobile et mis en rotation, un arbre (42) de rotation du système à mors mobile (41), un moteur (43) pour la rotation de l'arbre (42), un appareil de mesure de couple (44) disposé entre le moteur (43) et le système à mors mobile (41), et un coffret (45) logeant les éléments de calcul et comprenant une partie affichage sur laquelle peut être lue la valeur de la contrainte.

**Claims**

1. A method for selecting a polymeric insert intended to be chosen for its mechanical strength qualities so as to be incorporated into the construction of laminated glazing, the method consisting in evaluating the tear strength of the insert, **characterized in that** it also consists in evaluating the adhesion of said insert to at least one glass substrate, the adhesion of the insert being evaluated by twisting a specimen of the insert fastened to two glass substrates, by measuring the value of the torsional force or torque for which the separation of the insert from at least one of the substrates is initiated, by calculating the shear strength $\tau$ from this value and by comparing this value with a warning value established for a reference insert formed from PVB.

2. The method as claimed in claim 1, **characterized in that** the tear strength is evaluated by:

   - determining the value of the critical energy $J_c$ of the insert, this value being representative of the energy needed to propagate a crack initiated in the insert;
   - calculating the value of the critical energy normalized to thickness $\tilde{J}_c$ and defined by the equation $\tilde{J}_c = J_c \times e_1$, $e_1$ being the thickness of the insert; and
   - comparing $\tilde{J}_c$ with a reference value $\tilde{J}_{ref}$ representative of a reference insert formed by a PVB film 0.38 mm in thickness, and equal to 13.3 J/m, the insert meeting the tear strength criterion when $\tilde{J}_c > \tilde{J}_{ref}$.

3. The method as claimed in claim 1, **characterized in that** the mechanical strength of the reference insert with respect to its thickness is mathematically in the form of an approximately parabolic function defined by the critical energy $J_c$ as a function of the adhesive strength $\tau$.

4. The method as claimed in claim 3, **characterized in that** the insert whose mechanical strength is to be evaluated meets the tear and adhesive strength criteria when, after evaluating the critical energy and adhesive strength values, these values lie within the parabolic curve that has a minimum corresponding to a value of the critical energy of 17,500 J/m².

5. The method as claimed in any one of the preceding claims, **characterized in that** the insert is selected when, at a temperature of 20°C, its critical energy value is greater than 17,500 J/m² and its shear strength $\tau$ is between 3.8 and 6.9 MPa.

6. The method as claimed in claim 5, **characterized in that** the insert is selected when, at a temperature of 20°C, its critical energy value is greater than 22,500 J/m² and its shear strength $\tau$ is between 4.8 and 6.1 MPa.

7. The method as claimed in claim 1, **characterized in that** it consists in selecting said insert without having to evaluate mechanical strength by a destructive impact effect of the glazing.

8. The method as claimed in any one of the preceding claims, **characterized in that** it also consists in selecting the insert for the acoustic properties given to the laminated glazing, the insert meeting the selection of acoustic insulation properties is especially chosen when a bar 9 cm in length and 3 cm in width made of a laminated glass, which comprises two glass sheets 4 mm in thickness joined together by said insert 2 mm in thickness, has a critical frequency that differs by at most 35% from that of a glass bar having the same length and the same width and a thickness of 4 mm.

9. Method **characterized in** hat it consists to firstly choose the material suitable for meeting the acoustic insulation criteria and then to test the adhesion performance of this material according to claim 3 so as to deduce therefrom the thickness e needed to meet the tear strength criteria according to claim 2.

10. A device for implementing the method as claimed in any one of the preceding claims, **characterized in that** the device evaluates the shear strength of an insert and comprises two jaw systems intended to sandwich a glazing specimen consisting of two glass substrates and the insert, one of the systems being fixed while the other is capable of being moved and rotated, a shaft for rotating the movable-jaw system, a motor for rotating the shaft, a torque meter placed between the motor and the movable-jaw system, and a box that houses the computing elements and includes a display part on which the value of the strength may be read.

**Patentansprüche**

1. Verfahren zum Auswählen einer polymeren Zwischenlage, die vorgesehen ist, aufgrund ihrer mechanischen Widerstandseigenschaften für die Bildung einer Verbundglasscheibe ausgewählt zu werden, wobei das Verfahren darin besteht, die Reißfestigkeit der Zwischenlage zu bewerten, **dadurch gekennzeichnet, dass** es weiterhin darin besteht, die Haftung dieser Zwischenlage an mindestens einem Glassubstrat zu bewerten, wobei die Haftung der Zwischenlage bewertet wird, indem einem Probekörper, der aus der Zwischenlage, die mit zwei Glassubstraten verbunden ist, gebildet ist, eine Torsion mitgeteilt, der Wert der Torsionskraft oder des Drehmoments, bei welchem die Ablösung der Zwischenlage von mindestens einem der Substrate beginnt, gemessen, aus diesem Wert die Scherspannung $\tau$ berechnet und dieser Wert mit einem Grenzwert, der mit einer aus PVB gebildeten Referenzzwischenlage aufgestellt worden ist, verglichen wird.

2. Verfahren nach Anspruch 1, **dadurch gekennzeichnet, dass** die Reißfestigkeit bewertet wird, indem

   - der Wert der kritischen Energie $J_c$ der Zwischenlage, ein Wert, der für die Energie repräsentativ ist, die für die Fortpflanzung eines in der Zwischenlage ausgelösten Risses repräsentativ ist, bestimmt wird,
   - der kritische Energiewert $\tilde{J}_c$ berechnet wird, der auf die Dicke bezogen und durch die Relation $\tilde{J}_c = J_c \cdot e_1$, wobei $e_1$ die Dicke der Zwischenlage ist, definiert ist, und
   - $\tilde{J}_c$ mit einem Referenzwert $\tilde{J}_{ref}$ verglichen wird, der für eine Referenzzwischenlage repräsentativ ist, die von einer PVB-Folie mit einer Dicke von 0,38 mm gebildet wird, und welcher 13,3 J/m beträgt, wobei die Zwischenlage dem Reißfestigkeitskriterium genügt, wenn $\tilde{J}_c > \tilde{J}_{ref}$ ist.

3. Verfahren nach Anspruch 1, **dadurch gekennzeichnet, dass** die auf ihre Dicke bezogene mechanische Widerstandsfähigkeit der Referenzzwischenlage sich mathematisch in Form einer im Wesentlichen parabolischen Funktion darstellt, die durch die kritische Energie $J_c$ in Abhängigkeit von der Adhäsionsspannung $\tau$ definiert ist.

4. Verfahren nach Anspruch 3, **dadurch gekennzeichnet, dass** die Zwischenlage, deren mechanische Widerstandsfähigkeit bewertet werden soll, dem Reißfestigkeits- und dem Adhäsionskriterium genügt, wenn nach Bewertung des kritischen Energie- und des Adhäsionsspannungswertes diese Werte sich innerhalb der Parabolkurve befinden, die ein Minimum besitzt, das einem kritischen Energiewert von 17 500 J/m$^2$ entspricht.

5. Verfahren nach einem der vorhergehenden Ansprüche, **dadurch gekennzeichnet, dass** die Zwischenlage ausgewählt wird, wenn bei einer Temperatur von 20 °C ihr kritischer Energiewert mehr als 17 500 J/m$^2$ und ihre Scherspannung $\tau$ 3,8 bis 6,9 MPa beträgt.

6. Verfahren nach Anspruch 5, **dadurch gekennzeichnet, dass** die Zwischenlage ausgewählt wird, wenn bei einer Temperatur von 20 °C ihr kritischer Energiewert mehr als 22 500 J/m$^2$ und ihre Scherspannung $\tau$ 4,8 bis 6,1 MPa beträgt.

7. Verfahren nach Anspruch 1, **dadurch gekennzeichnet, dass** es darin besteht, die Zwischenlage auszuwählen, ohne die mechanische Widerstandsfähigkeit durch einen die Glasscheibe zerstörenden Schlageffekt bewerten zu müssen.

8. Verfahren nach einem der vorhergehenden Ansprüche, **dadurch gekennzeichnet, dass** es auch darin besteht, die Zwischenlage aufgrund der Schalldämmeigenschaften auszuwählen, die sie der Verbundglasscheibe verleiht, wobei die Zwischenlage, die der Auswahl der Schalldämmeigenschaften entspricht, insbesondere ausgewählt wird, wenn ein Stab mit einer Länge von 9 cm und einer Breie von 3 cm, der aus einem Verbundglas besteht, das zwei Glasscheiben mit einer Dicke von 4 mm, die durch diese Zwischenlage mit einer Dicke von 2 mm verbunden sind, umfasst, eine kritische Frequenz hat, die sich höchstens um 35 % von derjenigen eines Glasstabes unterscheidet, der dieselbe Länge und dieselbe Breite und eine Dicke von 4 mm hat.

9. Verfahren nach einem der vorhergehenden Ansprüche, **dadurch gekennzeichnet, dass** es darin besteht, zunächst das Material auszuwählen, das adäquat ist, um die Schalldämmkriterien zu erfüllen, und anschließend die Adhäsionseigenschaften dieses Materials nach Anspruch 3 zu prüfen, um daraus die Dicke e abzuleiten, die erforderlich ist, um die Reißfestigkeitskriterien nach Anspruch 2 zu erfüllen.

10. Vorrichtung zur Durchführung des Verfahrens nach einem der vorhergehenden Ansprüche, **dadurch gekennzeichnet, dass** die Scherspannung einer Zwischenlage von dieser Vorrichtung bewertet wird, die zwei Spannbackensysteme (40, 41), die vorgesehen sind, einen Probekörper aus einer Verbundglasscheibe, die aus zwei Glassubstraten und der Zwischenlage besteht, sandwichartig aufzunehmen, wobei eines der Systeme (40) feststehend ist, während das andere (41) bewegt und in Umdrehung versetzt werden kann, eine Welle (42) für die Umdrehung des Systems (41) mit beweglichen Spannbakken, einen Motor (43) für die Umdrehung der Welle (42), ein Gerät (44) zum Messen des Drehmoments, das zwischen dem Motor (43) und dem System (41) mit beweglichen Spannbacken angeordnet ist, und ein Gehäuse (45) für die Aufnahme der Rechenelemente, das einen Anzeigeteil enthält, von welchem die Spannungswerte abgelesen werden können, umfasst.

Fig.1

Fig.2

Fig.3

Fig.4

Fig.5

FIG. 6

FIG. 7

Fig.8

43    4

42      45

44

Fig.9

41

40